(19) Europäisches Patentamt / European Patent Office / Office européen des brevets

(11) **EP 3 554 247 B1**

(12) **EUROPEAN PATENT SPECIFICATION**

(45) Date of publication and mention of the grant of the patent:
**14.02.2024 Bulletin 2024/07**

(21) Application number: **17817861.2**

(22) Date of filing: **19.12.2017**

(51) International Patent Classification (IPC):
**A21D 13/38** (2017.01)    **A23L 11/00** (2021.01)
**A21D 13/32** (2017.01)

(52) Cooperative Patent Classification (CPC):
**A21D 13/32; A21D 13/38; A23L 11/05; A23P 20/20**

(86) International application number:
**PCT/GB2017/053823**

(87) International publication number:
**WO 2018/115856 (28.06.2018 Gazette 2018/26)**

(54) **FILLING COMPOSITIONS FOR FOOD PRODUCTS AND FOOD PRODUCTS CONTAINING THE COMPOSITIONS**

FÜLLZUSAMMENSETZUNGEN FÜR LEBENSMITTELPRODUKTE UND LEBENSMITTELPRODUKTE MIT DIESEN ZUSAMMENSETZUNGEN

COMPOSITIONS DE GARNITURE POUR PRODUITS ALIMENTAIRES ET PRODUITS ALIMENTAIRES CONTENANT LES COMPOSITIONS

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **19.12.2016 GB 201621646**

(43) Date of publication of application:
**23.10.2019 Bulletin 2019/43**

(73) Proprietor: **pladis (UK) Limited**
**Chiswick**
**London, W4 5YA (GB)**

(72) Inventors:
• **VAN DER KOOI, Lisanne Henrietta**
**5551 TG Valkenswaard (NL)**
• **SEVENOU, Olivier**
**Maidenhead**
**Berkshire SL6 6GZ (GB)**

(74) Representative: **Abel & Imray LLP**
**Westpoint Building**
**James Street West**
**Bath BA1 2DA (GB)**

(56) References cited:
**CZ-U1- 18 256**

• **Anonymous: ""Instant" Hummus with Flavor Variations Basic Hummus DRY MIX Recipe", , 15 June 2016 (2016-06-15), pages 1-2, XP055441969, Retrieved from the Internet: URL:http://web.archive.org/web/20160615145 317if_/http://www.21stcenturysimpleliving. com:80/wp-content/uploads/2016/02/Instant-Hummus-Recipe-with-Variations.pdf [retrieved on 2018-01-18]**
• **Anonymous: "The Well-Seasoned Cook: Just Add Water - Instant Chickpea Flour Hummus - My Legume Love Affair 25", , 2 August 2010 (2010-08-02), pages 1-6, XP055441873, Retrieved from the Internet: URL:http://thewellseasonedcook.blogspot.de /2010/08/just-add-water-instant-chickpea-f lour.html [retrieved on 2018-01-17]**
• **Anonymous: "Chocolate Hummus Cookie Sandwiches | Hummusapien", , 20 August 2015 (2015-08-20), pages 1-16, XP055441822, Retrieved from the Internet: URL:https://www.hummusapien.com/chocolate-hummus-cookie-sandwiches/ [retrieved on 2018-01-17]**
• **DATABASE GNPD [Online] MINTEL; October 2017 (2017-10), Anonymous: "Hummus Sandwich", XP002777438, Database accession no. 5162985**

- **Anonymous: "17.2: Fats and Oils - Chemistry LibreTexts", , 17 August 2020 (2020-08-17), pages 1-6, XP055749230, Retrieved from the Internet: URL:https://chem.libretexts.org/Bookshelves/Introductory_Chemistry/Book:_The_Basics_of_GOB_Chemistry_(Ball_et_al.)/17:_Lipids/17.02:_Fats_and_Oils [retrieved on 2020-11-11]**

**Description**

Field of the Invention

The present invention concerns food products. More particularly, but not exclusively, this invention concerns ambient-stable comestible compositions for use as fillings in food products, for example but not exclusively in low-moisture ambient-stable food products of the kind typically eaten between meals or as a meal replacement, including biscuits, snack products, food bars and the like. The invention also concerns processes for making the compositions and food products containing them.

Background of the Invention

Many known food products incorporate two or more components of different characteristics, for example one or more of different colour, different texture and different flavour. For example, biscuits or snack products may be provided with a filling. The term "filling" is to be understood as including a quantity of a composition that is partially or wholly enclosed by one or more other components of a food product. Illustrative of partially enclosed fillings are products in which a layer of a filling composition is positioned between opposed outer components, for example as in a sandwich biscuit having two opposed parallel planar biscuits embracing between them a filling layer which is typically bounded on its upper and lower faces by biscuits, with a perimeter portion of the filling layer being exposed. Illustrative of wholly enclosed filling compositions are biscuit or snack products in which the filling is provided in a void region within an outer casing, for example, the filling may be injected into a previously formed biscuit or snack product casing. It is also possible for a filling to be included within a snack or biscuit dough casing before baking, but baked fillings tend to have a texture which is different from a characteristically creamy texture of unbaked biscuit and snack fillings.

A wide variety of cream fillings are known as fillings for bakery products or the like. The known fillings often have a high fat content, with the result that a high proportion of the calorific content of such products tends to be derived from fats. Some previously known fillings incorporate a substantial proportion of dairy products, including whey powder, lactose or cheese powder. Such products offer a nutritionally valuable content, but may have a high calorie content derived from fats and/or carbohydrates including sugars. It is common for such products to have relatively low fibre content as well.

A desire for "healthy" eating has been increasingly prevalent in recent years. Consumers increasingly wish to include in their diets foods which are sources of fibre. Many consumers also wish to reduce calorie intake. There is a need for food products which provide a proportion of their calorific content in the form of protein and/or which contain dietary fibre. At the same time, many consumers wish for health reasons or reasons of personal preference to avoid consumption of products which contain gluten or dairy products. Soya ingredients are used in many food products, but have a number of drawbacks. They are high in oil content and do not have a flavour that is generally regarded as attractive. Further, soya is often derived from a genetically modified origin, which is objected to by some consumers, and can be allergenic. Nuts are also widely used as a nutritious component of fillings, especially peanut butter for example, but as a result of their very high oil content are high in calories and are avoided by some consumers due to nut allergies.

Cereal bars are commonly sold as a "healthy" option, and may contain dietary fibre in the cereal component as well as inclusions such as nuts providing a protein content. However, cereal bars are often high in sugar to give them a desired flavour and/or to assist with processing and bar formation, and they lack the characteristic appearance and texture of filled biscuits or snack products.

Also known are various products made with pastes containing bean, such as azuki bean paste or black bean paste. Such pastes tend to contain only a minor proportion of bean in a dough-like composition, and will often be baked with the product.

CZ 18 256 U1 (PULPANOVA ALENA) discloses fillings for making fine baked goods, the fillings being made from a mixture containing 0.1 to 99.8 wt% of flour or pulverized material from lupin and/or soya. Fillings consisting of either dry compositions or water-based compositions are disclosed.

It is an aim of the invention to make a filling composition with good storage life, which is ambient-stable and does not require baking, whilst providing the consumer with dietary fibre and/or providing a proportion of the calorific content of the product in the form of protein. It is a further aim of the invention to provide storage-stable food products, for example, biscuits, snack products and granola bars, comprising a said filling.

Summary of the Invention

The present invention provides a comestible food filling composition, the food composition comprising, based on the total weight of the composition,:

- at least 35% by weight pulse flour

- from 25 to 50% by weight fat and/or oil, wherein fat does not include a fat of animal origin, and wherein the fat may be solid or liquid at ambient temperature;

wherein the composition is ambient-stable, has a water activity of not more than 0.6, and has a specific gravity of not more than 1.05;

wherein the filling composition can be stored at from 20 to 25 °C for at least 10 weeks, without material deterioration in the form of detectable deterioration in organoleptic properties, and wherein the filling composition is aerated by 10% to 50%.

Surprisingly, it has been found that the use of pulse flour can give rise to an ambient-stable filling composition which contains dietary fibre and protein and that further has good organoleptic properties. Furthermore, the filling composition does not need to be cooked to attain the necessary storage stability, and therefore can be incorporated in a pre-formed, for example, previously baked or otherwise cooked, outer portion. Pulse pastes, for example hummus pastes, based on water are known, but have poor storage stability when stored at room temperature. In contrast to the known water-based pulse pastes the filling of the invention has a low water activity, and has good ambient stability, being storable at ambient temperatures for a number of weeks or months without development of rancid or other "off' flavours or other deterioration in flavour. The filling may advantageously be used in a variety of storage-stable baked sweet and savoury foodstuffs or other storage-stable food products that are typically eaten between meals or as a meal replacement. Suitable storage-stable baked sweet and savoury foodstuffs that may be used with fillings of the invention are crispier and drier than most cakes and bread. For example, the filling composition is able advantageously to provide dietary fibre and protein in products such as biscuits and snack products which often are low in dietary fibre and protein. Other products in which the filling composition may be used include extruded or expanded snacks and food bars (eg. Granola bars).

Pulses are the product of non-genetically modified, sustainable crops, and have low-allergenicity. They are a valuable source of protein in developed and underdeveloped countries, providing a healthy and more environmentally sustainable form of protein. In one embodiment, the pulse flour comprises chick pea flour, which results in the composition having an aroma and flavour reminiscent of hummus. The composition of this embodiment may if desired additionally comprise a sesame seed-derived component selected from sesame oil, sesame seed flour, and tahini, which further enhances the aroma and flavour of hummus.

Other pulses of which flours may be used as well as, or instead of, chick pea flour include, without limitation, lentils, dried peas, and faba beans.

According to a second aspect, the invention further provides a food product, comprising at least one comestible outer portion comprising a water content of not more than 11% by weight based on the total weight of the said outer portion, and a comestible filling composition as described herein above, wherein the comestible outer portion is selected from biscuit, cooked snack dough or granola. Advantageously, the at least one cooked comestible outer portion comprises a water content of not more than 8% by weight, for example not more than 6% by weight, preferably not more than 4% by weight, based on the total weight of the said outer portion. Such low water contents enhance the storage life of the product. In practice, the water content may typically be, for example, 3% or more based on the total weight of the said outer portion. Food products according to the second aspect of the invention include without limitation sandwich biscuits and filled snack products, such as cheese balls.

Furthermore, in a third aspect the invention provides a method for manufacture of a filled food product, comprising preparing a filling composition as described hereinabove; preparing at least one food product outer portion having a water content of not more than 11% by weight based on the total weight of the outer portion, and juxtaposing the filling composition with said at least one food product outer portion to obtain a filled food product; wherein the step of preparing a filling composition comprises mixing at least 35% by weight pulse flour and from 25 to 50% by weight fat and/or oil.

In a fourth aspect, the invention provides the use of at least one flour selected from faba bean flour, pea flour, chick pea flour and lentil flour in the manufacture of a comestible composition for use as a filling in a biscuit or snack product, the filling composition being as claimed.

Detailed Description

Definitions:

The term "filled" in relation to food products, including biscuits and snack products, is used herein to refer to a food product in which a filling composition is contained within the product, the filling composition being wholly or only partially enclosed by one or more outer portions. Illustrative filled products include, without limitation, sandwich biscuits, sandwich snack products and filled snack products such as cheese balls.

The term "biscuit" is used herein to include those products that are within the usual usage of that term in the UK, and for the avoidance of doubt includes without limitation products known in the USA and elsewhere as "cookies" as well as crackers, wafers, rice cakes and the like. Commercially manufactured biscuits have low water contents, such as moisture contents of less than 11%, generally less than 8% by weight, for example less than 6% or less than 4% by weight. Typically, the water content of commercially manufactured biscuits may be at least 0.5% by weight, for example at least 1% by weight. Biscuits herein are preferably those obtainable by continuous manufacturing processes conventionally used in the manufacture of biscuits, for example, continuous sheeting and cutting of dough pieces or rotary moulding, in each case followed by baking. Biscuits referred to herein preferably have a water activity of not greater than 0.6, advantageously not more than 0.5. In practice, biscuits referred to herein may typically have a water activity of not less than 0.05, for example not less than 0.2.

The term "snack product" is used herein to refer to storage-stable snack products which are typically sold as bagged snacks containing a multiplicity of individual pieces, each snack comprising one or more snack outer portion, for example a snack piece or shell, and a filling composition according to the invention. Snack pieces or shells are manufactured commercially, often in a continuous process, in particular by sheeting/cutting and subsequent frying and/or baking. Snack pieces or shells may also be manufactured by expansion e.g. hot air expansion, or by extrusion. Snack outer portions will generally have a moisture content of not exceeding 5% by weight, for example not exceeding 2% by weight. Typically snack outer portions will have a moisture content of at least 0.1%, for example 0.5% by weight. Furthermore, snack outer portions typically have a water activity of not greater than 0.6, advantageously not more than 0.5. In practice, biscuits referred to herein may typically have a water activity of not less than 0.05, for example not less than 0.2.

The term "fibre" is used herein to have the same meaning as in EU Regulation 1169/2011 dated 25 October 2011 (see Annex I), that is, carbohydrate polymers with three or more monomeric units, which are neither digested nor absorbed in the human small intestine and belong to the following categories:

- edible carbohydrate polymers naturally occurring in the food as consumed,

- edible carbohydrate polymers, which have been obtained from food raw material by physical, enzymatic or chemical means and which have been shown to have a beneficial physiological effect demonstrated by generally accepted scientific evidence,

- edible synthetic carbohydrate polymers which have a beneficial physiological effect demonstrated by generally accepted scientific evidence.

Content of protein herein is as calculated in accordance with EU Regulation 1169/2011 dated 25 October 2011 (see Annex I), that is, total Kjeldahl Nitrogen x 6.25. Calculation of the energy attributable to protein content (%kcal or %kJ) is as calculated from the protein content (in g) using the conversion factor in Annex XIV of EU Regulation 1169/2011 (4kcal/g or 17kJ/g) and converting to percentage of the total energy in kcal per 100g or kJ per 100g of the food.

The said definitions of dietary fibre and content of protein are to be understood as those defined above irrespective of any future variation of the said Guidelines or Regulation or any other national law or guidelines in any country.

Food products referred to herein as being a "source of fibre" are food products which contain at least 3 g of fibre per 100g, or at least 3% by weight.

Food products referred to herein as "high in fibre" are food products which contain at least 6 g of fibre per 100g, or at least 6% by weight.

Food products referred to herein as a "source of protein" are food products in which at least 12 % of the energy value of the food is provided by protein.

Food products referred to herein as a "high in protein" are food products in which at least 20 % of the energy value of the food is provided by protein.

Particle size distributions of pulse flours as referred to herein may be determined using a Laser Diffraction Particle Size Analyzer. Particle size values in $\mu$m corresponding to a value "dn" herein in which "n" is an integer, for example, 10, 50 or 90, refer to particles of which n% by volume have a particle diameter not more than the stated value in $\mu$m as determined by laser diffraction. For example a value of 50$\mu$m for "d10" would mean that 10% by volume of the particles have a diameter of not more than 50$\mu$m.

The term "pulse" is used herein to have the meaning used by the UN Food and Agricultural Organisation, according to which (see FAO Draft Definition and Classification of Commodities: Commodity Group 4, PULSES AND DERIVED PRODUCTS) pulses are annual leguminous crops, the term "pulses" being limited to crops harvested solely for dry grain, thereby excluding crops harvested green for food (green peas, green beans, etc.), which are classified as vegetable crops. Also excluded are those crops used mainly for oil extraction (e.g. soybean and groundnuts) and leguminous crops (e.g. seeds of clover and alfalfa) that are used exclusively for sowing purposes. According to the FAO, pulses are:

| Pulse | Common names and botanical names |
| --- | --- |
| BEANS, DRY | Phaseolus spp.: kidney, haricot bean (Ph. vulgaris); lima, butter bean (Ph. lunatus); adzuki bean (Ph. angularis); mungo bean, golden, green gram (Ph. aureus); black gram, urd (Ph. mungo); scarlet runner bean (Ph. coccineus); rice bean (Ph. calcaratus); moth bean (Ph. aconitifolius); tepary bean (Ph. acutifolius) Only species of Phaseolus should be included, though several countries also include certain types of beans. Commonly classified as Vigna (angularis, mungo, radiata, aconitifolia). In the past, these species were also classified as Phaseolus |
| BROAD BEANS, DRY | Vicia faba: horse-bean (var. equina); broad bean (var. major); field bean (var. mino |
| PEAS, DRY | garden pea (Pisum sativum); field pea (P. arvense) |
| CHICK-PEAS | chick pea, Bengal gram, garbanzos (Cicer arietinum) |
| COW PEAS, DRY | cowpea, blackeye pea/bean (Vigna sinensis; Dolichos sinensis) |
| PIGEON PEAS | pigeon pea, cajan pea, Congo bean (Cajanus cajan) |
| LENTILS | (Lens esculenta; Ervum lens) |
| BAMBARA BEANS | bambara groundnut, earth pea (Voandzeia subterranea) |
| VETCHES | spring/common vetch (Vicia sativa) |
| LUPINS | (Lupinus spp.) |
| PULSES NES | Including inter alia: lablab or hyacinth bean (Dolichos spp.); jack or sword bean (Canavalia spp.); winged bean (Psophocarpus tetragonolobus); guar bean (Cyamopsis tetragonoloba); velvet bean (Stizolobium spp.); yam bean (Pachyrrhizus erosus); |

"Pulse flours" referred to herein have, before or after grinding, preferably been heat-treated resulting in at least partial gelatinisation of starch therein. The term "pulse flour" is to be understood herein as including pulse protein powders. Heat-treated pulse flours are known and are commercially available, for example for use in the domestic or commercial manufacture of hummus. Pulse flours used in embodiments of the present invention are preferably flours of (dry) beans, (dry) peas, chick peas or lentils, with chick peas being especially preferred.

The terms "oil" and "vegetable oil" as used herein refer to oils of vegetable origin, and include modified vegetable oils, unhydrogenated vegetable oils, partially hydrogenated vegetable oils, hydrogenated vegetable oils and plasticised oils. The term "oil" as used herein with reference to any ingredient is not to be understood as implying that the ingredient is liquid at ambient temperature (generally understood as being from about 20 to 25°C). In the context of this specification, the term "fat" is to be understood as meaning the same as "oil". Thus, for avoidance of doubt, "fat" for the purpose of this specification does not include a fat of animal origin and may be solid or liquid at said ambient temperatures.

The term "baked" is used herein with reference to a product to refer to a cooking process in which the product has as a result of exposure to elevated temperature undergone a chemical change that is not limited to water loss, and usually including starch gelatinisation. The term "non-baked" when used to refer to compositions herein refers to compositions that have not been subjected to such a baking process.

References herein to an amount of a component in a product or composition as "% by weight" are to be understood as being % by weight based on the total weight of the product or composition unless otherwise explicitly stated or implied in the context of this specification.

Ambient-stable food products are well-understood by those skilled in the art as food products which can be stored at ambient temperature (generally understood as being from about 20 to 25°C) for a substantial period of time. As used herein, "ambient-stable" and "storage-stable" are to be understood as referring to food products that can be stored at ambient temperature for at least 10 weeks, advantageously at least 27 weeks, without material deterioration in the form of detectable deterioration in organoleptic properties. Detectable deterioration in organoleptic properties may be detectable as noticeable deterioration in one or more of flavour, texture and appearance on eating, or may be detectable indirectly by analytical detection of compounds such as peroxide and anisidine that are associated with deterioration of organoleptic properties. It will be appreciated that ambient-stable products in which the filling of the invention is used will typically be sold in packages containing one or, more usually, a plurality of the products. For example, biscuits or snack products will typically be contained in substantially airtight packaging in which passage of water is substantially prevented.

The pulse flour is preferably present in the composition in an amount of at least 35% by weight, based on the total weight of the composition, for example 35 to 70% by weight. The pulse flour may comprise flour derived from more than one pulse.

The pulse flour is preferably present in such an amount that the proportion of the energy value ("calorific value" in kcal/100g, or energy value in kJ/100g) of the composition attributable to protein present in the composition is at least 4%, for example 5% or more, such as up to 12% or up to 11.5%. In some embodiments, the proportion of the energy value of the composition attributable to protein present in the composition is arranged to be at least 12% so that the filling can provide a valuable source of protein, for example up to 30% , preferably up to 25%. In some embodiments, the content of protein may be increased by inclusion of a further proteinaceous material derived from a pulse, for example selected from pulse flours (including pulse protein powders). Where chick pea flour is used as a pulse flour, illustrative further proteinaceous pulse materials may be selected from lentil or pea flours, including lentil or pea protein powders.

Other non-pulse proteins may be used to increase protein content if desired. For example, in certain embodiments described below, sesame seed flour may be present to add to the protein content, and when used in combination with chick pea flour may advantageously enhance a flavour of hummus. Where used, sesame seed flour may advantageously be defatted sesame seed flour, enabling the flavour and protein enhancement to be achieved without adding significantly to the fat content and/or impacting detrimentally on storage stability.

The proportions of pulse flour, for example chick pea flour, and other ingredients are preferably selected such that the composition comprises at least 3% by weight, for example up to 6%, or up to, 5.5% by weight dietary fibre, based on the weight of the composition. In another aspect, the proportions of pulse flour, for example chick pea flour, and other ingredients may be selected such that the composition comprises at least 6% by weight, of dietary fibre, for example up to 20%, or up to 15% by weight, based on the weight of the composition. Thus, the filling of the invention is able to provide a useful source of fibre.

The composition advantageously contains an oil in an amount from 25 to 50% by weight Suitable fats (oils) for use in the filling compositions of the invention include fats based on palm kernel, palm and coconut. In some circumstances, it may be desirable to use certain edible oils of vegetable origin e.g. sunflower oil, together with a structuring agent. The selection of suitable structuring agents will be a routine matter for those skilled in the art. Fats (oils) suitable for use in the filling compositions may be unhydrogenated, hydrogenated or partially hydrogenated.

Where the pulse flour comprises chick pea flour, the filling may comprise at least 35% by weight chick pea flour, or may comprise at least 35% by weight pulse flour consisting of a proportion of chick pea flour and a proportion of at least one further pulse flour. In one embodiment, a filling composition comprises at least 15% by weight chick pea flour, advantageously at least 20% by weight, for example at least 30% by weight chick pea flour, and at least 30% vegetable oil by weight, the composition optionally additionally comprising one or more additional pulse flours. Optionally present as an additional pulse flour may be one or more flours selected from pea flours and lentil flours, although other pulse flours may be used. Optionally, the total amount of pulse flour including chick pea flour and said one or more additional pulse flours, for example one or more additional pulse flours selected from pea flour, lentil flour and faba bean flour, may be from 35% to 70% by weight based on the total weight of the filling. Improved flavour and texture may be achievable where the amount of pulse flour does not exceed 70% by weight, or is for example not more than 60% by weight. The composition may optionally comprise a filler, for example a starch or starchy material. Illustrative starch-based components include, without limitation, modified starches, wholly or partially gelatinised starches, native starches and starchy flours. Suitable starches may be one or more starches selected from cereal starches (including wheat starch, rice starch or maize starch), potato starches and tapioca starches. Other suitable starchy materials include, for example, cereal flours. In an illustrative embodiment, the starch-based component comprises wheat starch. Where present, said one or more starch-components, for example wheat starch, may be included in an amount of up to 18% by weight, for example up to 20% by weight, based on the weight of the composition.

The composition may comprise additional ingredients that do not unacceptably interfere with the texture and flavour of the composition. Where present, such additional ingredients will normally be included in amounts that do not exceed 18% by weight, based on the weight of the composition. Illustrative of additional ingredients that may be present include fillers, flavourings, colourings, antioxidants, and salt.

The filling composition of the invention has a specific gravity of not greater than 1.05. Most biscuit creams have a specific gravity exceeding 1.05. For example, without aeration, typical biscuit creams may have a specific gravity of about 1.2 or more. In practice, the specific gravity of a filling composition having a specific gravity greater than 1.05 may in some embodiments be reduced by aeration such that it is 1.05 or less. The filling composition is aerated by 10% to 50%.

The filling compositions advantageously have a specific gravity in the range of from 0.6 to 1.05, for example 0.7 to 1.05. It has been found that, when the specific gravity is in that range, the fillings have a pleasant, smooth texture. Reducing the specific gravity can give especially advantageous results in the case of embodiments herein in which chick pea flour is used, particularly coarse chick pea flours with a significant content of large particles (e.g. 50% by volume with a particle size as determined by laser diffraction of at least 100μm). Perceived grittiness resulting from the presence of larger particulates in the pulse flour appears to be reduced if the composition is so aerated that the specific gravity is less than 1.05 (which may for some compositions correspond to an aeration of about 15%). Higher aeration levels of 20% to 30% or more (with correspondingly lower specific gravities in the range of about 1.0 to 0.65) can give both enhanced smoothness and a reduction in the number of calories per unit volume of the filling. The aeration does not exceed 50%.

Aeration at levels of 10% or higher suitable for reducing the specific gravity to a value within the range of from 0.6 to 1.05, can be obtained by adoption of suitable mixing conditions for the filling. Selection of suitable mixing conditions and modification thereof to achieve target specific gravities will be a routine matter for those skilled in the art. In general, suitable mixing conditions will include mixing with a mixer blade suitable for imparting aeration at an appropriate mixing speed and for a period of time sufficient to incorporate the desired amount of air into the mixture.

The composition has a water activity of not more than 0.6. A low water activity of not more than 0.6, advantageously not more than 0.5, enables the composition to be used in contact with hygroscopic or otherwise moisture-sensitive food products, for example as a filling for biscuit or snack outer portions, without causing rapid deterioration of the biscuit or snack portion through moisture transmission. In certain advantageous embodiments described below, the water activity is less than 0.5. It is preferred that the water activity is between 0.3 and 0.5, for example about 0.4.

In one embodiment of food product according to the second aspect of the invention, said at least one comestible outer portion comprises at least two opposed biscuits, or at least two opposed snack pieces selected from baked, expanded, extruded and fried snack pieces, and said filling composition is embraced between the opposed biscuits or snack pieces. In that embodiment, the filling is advantageously juxtaposed between two parallel planar outer portions, the resulting product with the filling being a "sandwich" product. In an illustrative example the food product is a sandwich product comprising a layer of filling composition according to the invention between opposed cookies.

In another embodiment said at least one comestible outer portion comprises a hollow envelope portion defining a void region within said envelope portion, said filling composition being located in said void region.

In certain embodiments of food products of the invention, the filling composition is in accordance with the first aspect of the invention and may constitute at least 20%, for example about 30%, of the weight of the product, with the biscuit or snack outer portion(s) constituting up to 80%, for example about 70% of the weight of the product.

In certain food products of the invention at least 12% of the calorific value of the food product is attributable to protein. In certain said food products, up to 25% of the calorific value of the invention may be attributable to protein, for example up to 20% or up to 15%. Some benefit in terms of reducing unnecessary calorie intake in the context of overall daily intake may also be obtainable when at least 4%, for example 5% or more, of the calorific content of the food product is attributable to protein.

In some illustrative food products of the invention, the filling composition comprises a chick pea flour, the filling composition optionally additionally comprising one or more ingredients selected from other pulse flours and other proteinaceous materials, especially proteinaceous material derived from sesame seeds, for example sesame seed flour. The amounts of chick pea flour and, if present, sesame seed flour in the filling are advantageously as disclosed above with reference to the first aspect of the invention.

At least one outer portion is selected from biscuits and baked snack product casings.

In embodiments where the food product is a snack food product, the at least one outer portion may if desired be a baked snack product casing, or an expanded or extruded snack product casing which may optionally additionally be fried or baked.

In the method according to the third aspect of the invention, the ingredients are mixed to obtain the filling composition. Where, as is typical, the mixture has a specific gravity of greater than 1.05, the mixture may be subjected to further processing to reduce the specific gravity, for example by high speed mixing under conditions to generate sufficient aeration to reduce the specific gravity to not more than 1.05. For that purpose aeration of 10% or more may be required in the filling composition.

In one advantageous embodiment of the invention a comestible food filling composition comprises at least 35% by weight of one or more particulate material selected from particulates of (dry) beans, (dry) peas, chick peas and lentils, and not more than 50% by weight fat, wherein the composition is ambient-stable, has a water activity of not more than 0.6, and has a specific gravity of not more than 1.05.

In the above-mentioned fourth aspect of the invention a said comestible compositions comprising at least one flour selected from faba bean flour, pea flour, chick pea flour and lentil flour optionally comprise not more than 50% by weight fat, for example not more than 45% by weight fat, and may advantageously have a water activity of not more than 0.6, and a specific gravity of not more than 1.05. The comestible compositions comprising at least one flour selected from faba bean flour, pea flour, chick pea flour and lentil flour can usefully provide a source of protein and/or may usefully enhance the calorific value attributable to protein of a product comprising the filling. When used as fillings with one or more comestible outer portions, for example as a layer between opposed biscuits (including cookies) or snack portions, or as a filling inside an outer portion, the fillings may be used to enhance protein content and/or to enhance the calorific value attributable to protein of the filled product.

Brief Description of Drawings

Fig. 1 is a side view of an exemplary sandwich product according to an aspect of the invention comprising a filling comprising a flour derived from one or more pulses;

Fig. 2 is a section through a filled snack product according to an aspect of the invention;

Fig. 3 is a flow diagram showing a method of making a filling composition according to the invention; and

Fig. 4 is a flow diagram showing a process for the manufacture of a food product according to the invention containing a filling composition.

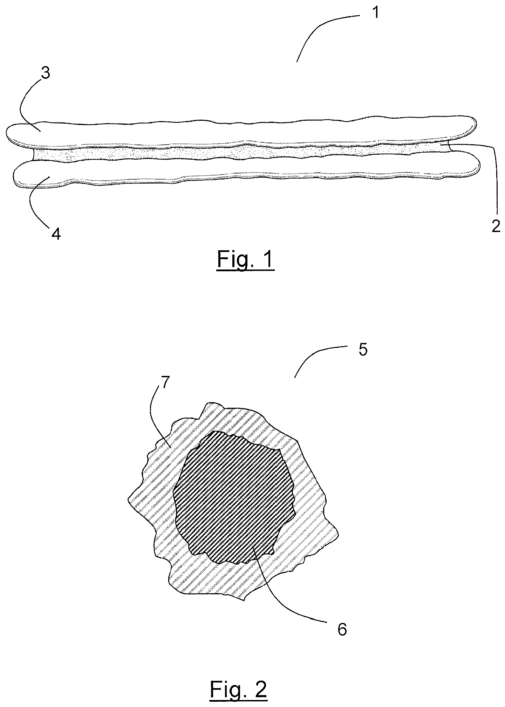

Fig. 1 shows a first exemplary food product according to an aspect of the invention. The food product comprises a sandwich product 1 in which a layer of filling 2 is embraced between two comestible outer portions 3, 4 which may be, for example, parallel opposed planar biscuits (for example cookies). In an exemplary embodiment the filling layer 2 is a filling composition comprising at least 35% by weight pulse flour and not more than 50% by weight fat, wherein the composition is ambient-stable, has a water activity of not more than 0.6, and a specific gravity of not more than 1.05. In certain exemplary products as shown in Fig. 1, the filling 2 may comprise one or more flours selected from faba bean flour, pea flour, chick pea flour and lentil flour, the flour or flours advantageously being present in an amount of at least 35% by weight based on the total filling weight, and the filling 2 further comprising not more than 50% by weight fat.

With reference to Fig. 2, a food product 5 according to another exemplary embodiment comprises a body 6 of filling composition enclosed within a cooked comestible outer portion in the form of an envelope portion 7. Envelope portion 7 provides an outer housing or casing and defines a void region within which said filling composition is provided. The envelope outer portion 7 is preferably an edible outer biscuit or snack product portion. The filling composition body 6 may comprise any filling according to the invention, for example one of those described above with reference to Fig. 1.

The comestible outer portions 3, 4 of Fig. 1 and the envelope portion 7 of Fig. 2 each have a water content of not more than 11% by weight or less, as that helps to avoid any detrimental influence on the ambient-stability of the filling composition, and thus helps to maintain the ambient-stability of the food product itself when stored at ambient temperatures (e.g. 20 to 25°C) in airtight packaging such as that typically used in packs of biscuits and snack products sold in grocery retail outlets such as shops or supermarkets.

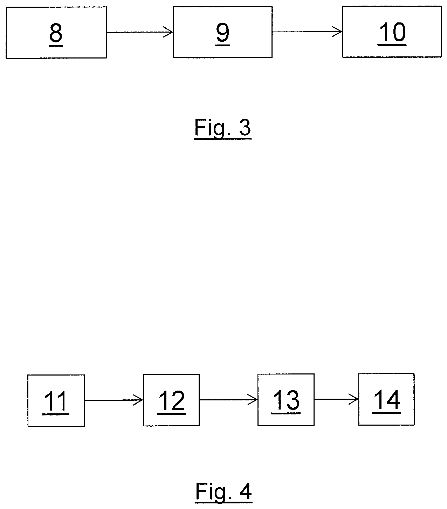

Referring to Fig. 3, in a method for the manufacture of a filling composition according to the invention, a first method step 8 comprises mixing at least 35% by weight pulse flour and not more than 50% by weight fat to obtain a mixture. The mixture so obtained is then subjected to an aeration treatment step 9 in which air is introduced into the mixture, for example by continuing mixing under conditions suitable to incorporate sufficient air to obtain a structurally stable aerated filling composition having a specific gravity of not more than 1.05. The compositions are ambient-stable, having a water activity of not more than 0.6, and may optionally be incorporated in a food product in an incorporation step 10 before or after any optional further processing steps.

With reference to Fig. 4, in a method for manufacturing a food product according to the invention, in a first step 11 there is provided a filling composition according to the invention, for example a filling composition obtained according to the method of Fig. 3. In a preparation step 12 there are prepared comestible outer portions having a water content of not more than 11% by weight based on the total weight of the outer portion. At least one of the outer portions is then brought into juxtaposition with a portion of filling composition in a juxtaposing step 13 to provide a food product which may optionally be subjected to further processing steps. For example, the food product is optionally subjected to a packaging step 14 in which the food product is packaged in an airtight pack or other container such as those conventionally used in packaging of biscuits and snack products for commercial sale. Said juxtaposing step 13 may comprise introducing a portion of filling into a void enclosed within an envelope portion, such as envelope portion 7 shown in Fig. 2. Additionally or alternatively, juxtaposing step 13 may comprise bringing a plurality of outer portions into juxtaposition with a portion of filling, for example bringing two planar outer portions such as those indicated by reference numerals 3, 4 in Fig.1 into juxtaposition with a layer of filling to form a sandwich product as described with reference to Fig. 1. It will be appreciated, however, that the structures and configurations shown in Figs. 1 and 2 are merely examples and a wide variety of different arrangements of outer portions and filling are possible without departing from the invention.

It will in general be desirable that the filling compositions of the invention contain no added sugar, and if added sugar is included it will usually be present in an amount not exceeding 10% by weight, especially not exceeding 5% by weight of the total weight of the filling.

Whilst the present invention has been described and illustrated with reference to particular embodiments, it will be appreciated by those of ordinary skill in the art that the invention lends itself to many different variations not specifically illustrated herein. By way of example only, certain illustrative Examples will now be described.

## Examples

### Materials

Fine chick pea flour used in the Examples herein was a heat treated chick pea flour commercially available from Codrico Rotterdam BV as "Fresh Hummus Powder" (a powder of precooked chick pea suitable for preparation of hummus), and had a particle size distribution, as determined by laser diffraction, as follows:

d10 = 8.3 $\mu$m

d50 = 73.3 $\mu$m

d90 = 328.2 $\mu$m

Coarse chick pea flour used in the Examples herein was heat-treated chick pea flour available commercially from Limagrain and had a particle size distribution, as determined by laser diffraction, as follows:

d10 = 24 $\mu$m

d25 = 61 $\mu$m

d50 = 170 $\mu$m

d75 = 243 $\mu$m

d90 = 304 $\mu$m

In the particle size distributions above, the particle sizes were determined by laser diffraction as hereinafter described and each value dn indicates the volume of particles with a particle size (as determined by laser diffraction) not more than n $\mu$m.

Sesame seed flour was obtained as partially defatted sesame seed flour commercially available from Dipasa Europe.

Pea protein powder was as commercially available from Roquette Freres SA (France).

Coarse lentil flour, yellow pea flour and faba bean protein flour were obtained as commercially available under the trade mark "PulsePlus" from AGT Food and Ingredients (Canada).

### Methods

### Method for making filling composition

Plasticised palm oil is heated to 80°C at which it is liquid. Where present, the sesame seed flour is stirred into the oil. The minor ingredients (flavourings, salt, citric acid) are added and stirred gently into the mixture. The pulse flour and, if present, starch are added and stirred into the mixture. Mixing is continued in a high speed mixer with a cold water jacket in order to obtain optimised aeration. Achievement of the desired degree of aeration may be checked by determining the specific gravity as described below. Alternatively, if desired, a scrape-surface heat exchanger may be used. The resultant aerated structures are structurally stable.

### Method for measuring degree of aeration and specific gravity

Specific gravities of compositions herein were measured at room temperature (20°C) using the steps 1 to 3 below:

1. Measure the weight (X) of water in a 140mL container. Ensure water is level with the top of the container.

2. Measure the weight (Y) of filling composition in the same container as step 1 - Overfill and scrape the top off with a knife so that the top surface is level with the top of the container.

3. Calculate SG1 with the following equation: Y/X = SG1.

In the Examples below the value SG1 for all filling compositions was found to be 1.2.

Where aeration values of a filling composition are stated herein, those are determined by first measuring the specific gravity of the unaerated composition, that is, the filling composition made by the method described above, with the exception of the final high speed mixing step. Following determination of the specific gravity of the unaerated filling composition by the steps 1 to 3 above a degree of aeration is determined for the aerated filling composition using the steps 4 to 7 below:

4. Aeration is effected by high speed mixing with a cold water jacket as described in the above-described method for making the filling.

5. The weight (Z) of aerated composition is measured in the same container as step 1 - Overfill and scrape the top off with a knife so that the top surface is level with the top of the container.

6. The specific gravity SG2 of the aerated composition is calculated with the following equation: Z/X = SG2

7. The degree of aeration is calculated with the following equation:

$$\% \text{ aeration (ie \% air by volume)} = ((SG1 - SG2)/ SG1) \times 100$$

**Method for measuring particle size distribution**

Particle size distributions of pulse flours as referred to herein may be determined using a Laser Diffraction Particle Size Analyzer. The determination of the particle size distribution using Laser Diffraction Analyzers is a routine technique widely known and practised, with calculation of distributions being performed by the Analyzer software. Particle size distributions herein were determined using as Analyzer a Beckman Coulter 'LS 200 Coulter Optical Module' with 'Dry Powder Module (DPM)' which is in use connected to computer and printer method (Coulter LS Series Product Manual, October 2011, Beckman Coulter, Inc.).

**Method for determining water activity**

Water activities (Aw) stated herein are as measurable using the chilled-mirror dewpoint technique with an AquaLab water 25 activity meter. The Aqualab meter has a standard sample pot and requires a standard sample size. The sample is placed in the sample pot which is immediately lidded and allowed to cool to below 25°C before insertion into the measuring equipment. The measuring equipment then starts the 30 measurement cycle which is automatically controlled by the equipment. A stainless steel mirror within the AquaLab water activity meter is repeatedly cooled and heated while dew forms and is driven off. Each time dew forms on the mirror the instrument measures the Aw and temperature of the sample. When Aw values of consecutive readings are less than 0.001 apart the measurement process is completed, the end value being taken to one decimal place.

**Method for determining water content of certain food material**

Any suitable method may be used to determine water content where water content is to be determined for a comestible outer portion to be used in combination with a filling. For example, the following methods are appropriate: Water content for biscuits and low moisture snacks are suitably determined in accordance with International Standard method ISO 712-2009 [ISO 712-2009 - Cereals and cereal products - Determination of moisture content (Determination of moisture content of low moisture homogeneous foods. In the case of foodstuffs biscuits (with no high fat inclusions), crisped rice heating/drying is carried out in an oven at 131°C for 90 min. Modification of the heating/drying conditions may be appropriate in the case of certain products but will not materially affect the measured value. For example, in the case of, cereal bars a gentler heating regime is used in heating/drying at 70°C in a vacuum oven for 5 hours, whilst for extruded snacks the heating/drying step may be at 103°C for 4 hours.

**Examples 1 to 6**

Using the method above, a number of filling compositions were made. Examples 1 to 3 used coarse chick pea flour whilst fine chick pea flour was used in Examples 4 to 6. Other ingredients were as shown in Table 1 below, which also indicates the values of water activity, total energy (kcal/100g and kJ/100g), protein content (in terms of g/100g and % of energy in kcal or kJ obtainable from protein content), and fibre content (g/100g) . Specific gravity was measured before (SG1) and after (SG2) the high speed mixing step. The water activity of the final composition was measured.

Table 1: Examples 1 to 6

| Example: | 1 | 2 | 3 | 4 | 5 | 6 |
|---|---|---|---|---|---|---|
| Coarse chickpea flour | 46.4% | 21.5% | 41.0% | | | |
| Fine chickpea flour | | | | 46.4% | 21.5% | 41.0% |
| Palm fat | 39.6% | 43.1% | 46.7% | 39.6% | 43.1% | 46.7% |
| Sesame seed flour | 12.0% | 7.8% | | 12.0% | 7.8% | |
| Wheat starch | | | 10.6% | | | 10.6% |
| Salt | 0.8% | 0.8% | 0.7% | 0.8% | 0.8% | 0.7% |
| Citric acid | 0.2% | 0.2% | 0.2% | 0.2% | 0.2% | 0.2% |
| Garlic | 0.5% | 0.4% | 0.4% | 0.5% | 0.4% | 0.4% |
| Cumin ground | 0.5% | 0.4% | 0.4% | 0.5% | 0.4% | 0.4% |
| Pea proteins | | 25.8% | | | 25.8% | |
| **Total** | 100% | 100% | 100% | 100% | 100% | 100% |
| Energy (kJ/100g) | 2394 | 2458 | 2374 | 2486 | 2500 | 2465 |
| (kcal/100g) | 591 | 599 | 585 | 603 | 604 | 597 |
| Protein g/100g | 15.3 | 31.6 | 8.4 | 17.2 | 32.5 | 10.3 |
| Carbohydrate g/100g | 30.5 | 14.5 | 39.2 | 34.2 | 16.2 | 42.9 |
| Fat g/100g | 43.7 | 45.3 | 42.3 | 43.6 | 45.2 | 42.2 |
| Fibre g/100g | 7.4 | 3.5 | 7.0 | 2.6 | 1.3 | 2.1 |
| Moisture % | 5.9 | 4.1 | 7.1 | 5.2 | 3.8 | 6.4 |
| | | | | | | |
| Protein (%energy/kcal) | 10.6% | 21.6% | 5.9% | 11.7% | 22.0% | 7.0% |
| | | | | | | |
| Aeration | 27.8% | 33.3% | 27.7% | 29.8% | 29.8% | 30.8% |
| SG2 | 0.87 | 0.80 | 0.87 | 0.84 | 0.84 | 0.83 |
| Water activity | 0.4 | 0.4 | 0.5 | 0.4 | 0.4 | 0.5 |
| pH | 5.8 | 5.9 | 6 | 5.7 | 5.8 | 5.6 |

As may be seen from the data at the bottom of Table 1 the filling compositions of Examples 1 and 3 are high in fibre (more than 6g per 100g), whilst Example 2 also provides a useful source of fibre, with more than 3g per 100g composition. The filling compositions of Examples 2 and 5 are high in protein, with more than 20% of the energy value of the composition being provided by protein. Examples 1 and 4 also provide more than 10% of the energy value of the composition in protein. The creams of Examples 4 to 6 were, on eating, found to be smoother than those of Examples 1 to 3.
When used as a filling for a biscuit or snack product, the creams of Examples 1 to 6 have a flavour reminiscent of hummus, and are advantageous in providing fibre content, as well as contributing usefully to protein content.
The filling of Example 2 is particularly advantageous, providing both a useful source of fibre of 3.5g per 100g and high protein content with 21.6% of the energy value being in the form of protein, as well as having a low water activity of 0.4.

**Examples 7 to 9**

Three further filling compositions were made as described in Examples 1 to 6 except that the chick pea flour was replaced by coarse lentil flour, yellow pea flour or faba bean flour. Other ingredients were as shown in Table 2 below, which also indicates the values of water activity, total energy (kcal/100g and kJ/100g), protein content (in terms of g/100g and % of energy in kcal or kJ obtainable from protein content), and fibre content (g/100g). Specific gravity was measured before (SG1) and after (SG2) the high speed mixing step. The water activity of the final composition was measured.

Table 2: Examples 7 to 9

| Example: | 7 | 8 | 9 |
|---|---|---|---|
| Coarse lentil flour | 49.5% | | 33.0% |
| Yellow pea flour | | 49.5% | |
| Faba bean protein flour | | | 16.5% |
| Palm fat | 31.6% | 31.6% | 31.6% |
| Wheat starch | 17.9% | 17.9% | 17.9% |
| Salt | 1.1% | 1.1% | 1.1% |
| **Total** | 100% | 100% | 100% |
| | | | |
| Energy (kJ/100g) | 2060 | 2190 | 2090 |
| (kcal/100g) | 495 | 526 | 502 |
| Protein g/100g | 12.4 | 12.3 | 17.6 |
| Carbohydrate g/100g | 36.3 | 43.7 | 31.7 |
| Fat g/100g | 30.8 | 32.7 | 31.6 |
| Fibre g/100g | 11.3 | 3.8 | 10.1 |
| Moisture % | 7.7 | 5.7 | 6.7 |
| | | | |
| Protein (%energy/kcal) | 10.3% | 9.6% | 14.4% |
| | | | |
| Aeration | 18.0% | 21.8% | 11.8% |
| SG2 | 0.99 | 0.92 | 1.04 |
| Water activity | 0.5 | 0.4 | 0.5 |

The filling compositions of Examples 7 to 9 provided a useful source of dietary fibre, with Examples 7 and 9 in particular being high in fibre. The filling compositions of these Examples also contained protein, with Example 9 in particular providing a useful source of protein providing 14.4% of the total calorific value of the composition.
The filling compositions of Examples 1 to 9 were ambient-stable showing no detectable deterioration in texture or flavour after 12 weeks, with measurements of peroxide values and anisidine values in the compositions over a period of 100 days supporting the finding that there had been no detectable flavour deterioration.

**Examples 10 and 11**

Two further filling compositions were made using coarse chick pea flour as pulse flour in the method described above except that after mixing the mixture was subjected to aeration using a large scale commercial aeration apparatus. The resultant filling compositions had specific gravities of 0.69 and 0.71, representing aeration of over 40% as compared with the unaerated mixtures. The filling composition of Example 11 provided a useful source of fibre (4.5g per 100g composition) and also included 9.9g/100g protein content. The fibre and protein contents of Example 10 were similar.

The water activity was under 0.6. The compositions of Examples 10 and 11 were perceived in sensory evaluation to be smooth-textured, in spite of the coarseness of the pulse flour used. They had a flavour reminiscent of hummus.

Table 3: Examples 10 and 11

| Example: | 10 | 11 |
|---|---|---|
| Coarse chickpea flour | 41.0% | 41.0% |
| Palm fat | 46.7% | 35.0% |
| Whey powder | | 10.6% |
| Wheat starch | 11.4% | 12.5% |
| Salt | 0.7% | 0.7% |
| Citric acid | 0.2% | 0.2% |
| **Total** | 100% | 100% |
| | | |
| Aeration | 42.7% | 40.5% |
| SG2 | 0.69 | 0.71 |

In some preferred food products, a filling according to an embodiment of the invention may be used as a filling with a biscuit or snack outer, the filling contributing usefully to the fibre and/or protein content of the resultant biscuit or snack product.

**Example 12**

A filling composition was made using the following ingredients in the method described above:

| Filling composition | % |
|---|---|
| Fat | 35 |
| Chick pea flour | 45 |
| starch | 18.4 |
| salt | 1 |
| seasonings | 0.6 |
| total | 100 |

The filling composition had a water activity of less than 0.6 and a specific gravity of about 0.85.
Biscuits were made using the following ingredients:

| Biscuit | % |
|---|---|
| water | 22 |
| bran | 5 |
| raising agents | 2.5 |
| Fat | 7 |
| flour | 55 |
| pea protein | 7 |
| other minor ingredients | 1.5 |
| total | 100 |

The dry ingredients were mixed, with the water then being incorporated to form a dough, which was formed into individual pieces and baked to obtain biscuits. The biscuits had a moisture content of 2.6% by weight based on the total biscuit weight.

Portions of filling were each used to form a filling layer between respective pairs of biscuits to form sandwich biscuits. The relative amounts of filling and biscuits were so arranged that each sandwich biscuit comprised by weight 30% filling and 70% biscuit. The finished sandwich biscuits had a moisture content of 3.9% by weight based on the total weight.

The resulting sandwich biscuit contained about 14% by weight protein (corresponding to 12% of the total energy in kcal or kJ) and about 6g/100g dietary fibre, thus being high in fibre and a beneficial source of protein. The sandwich biscuit was storage-stable, retaining taste and texture for at least 27 weeks.

**Claims**

1. A comestible non-baked food filling composition having a water activity of not more than 0.6 and a specific gravity of not more than 1.05, wherein the filling composition comprises:

   - at least 35% by weight pulse flour; and
   - from 25 to 50% by weight fat and/or oil, wherein fat does not include a fat of animal origin, and wherein the fat may be solid or liquid at ambient temperature;

   wherein the filling composition can be stored at from 20 to 25 °C for at least 10 weeks, without material deterioration in the form of detectable deterioration in organoleptic properties, and wherein the filling composition is aerated by 10% to 50%.

2. A composition according to claim 1, wherein the proportion of the energy value (in kcal/100g or kJ/100g) of the composition attributable to protein present in the composition is at least 5%, preferably at least 12%; and/or the composition comprises dietary fibre in an amount of at least 3g per 100g, preferably at least 6g per 100g.

3. A composition according to any one of the preceding claims, wherein the pulse flour comprises one or more flours selected from the group consisting of flours of chick pea, dry beans, faba beans, dry peas and lentils, preferably chick pea flour; and/or the composition further comprises one or more ingredients derived from sesame seeds selected from the group consisting of sesame oil, sesame seed flour and tahini.

4. A food product comprising at least one cooked comestible outer portion comprising a water content of not more than 11% by weight based on the total weight of the said outer portion, and a filling composition according to any one of claims 1 to 3, and wherein the comestible outer portion is selected from the group consisting of biscuit, cooked snack dough and granola.

5. A food product according to claim 4, wherein said at least one comestible outer portion comprises at least two opposed biscuits, or at least two opposed snack pieces selected from the group consisting of baked, expanded, extruded or fried snack pieces, and said filling composition is embraced between the opposed biscuits or snack pieces; or wherein said at least one cooked comestible outer portion comprises an edible outer biscuit or snack product portion comprising a hollow envelope portion defining a void region within said envelope portion, said filling composition being located in said void region.

6. A food product according to claim 4 or claim 5, wherein the food product comprises at least 20% by weight of the said filling composition, and/or wherein at least 12% of the calorific value of the food product is attributable to protein, and/or wherein the filling composition comprises a chick pea flour.

7. A food product according to any one of claims 4 to 6, wherein the at least one outer portion is a biscuit, a cookie, a baked snack product outer portion, or an expanded or extruded snack product outer portion.

8. A food product according to any one of claims 4 to 7, wherein the at least one cooked comestible outer portion comprises a water content of not more than 8% by weight, preferably not more than 6% by weight, based on the total weight of the said outer portion.

9. A food product according to any one of claims 4 to 8, wherein the food product is a sandwich biscuit or a filled snack product comprising a filling composition according to any one of claims 1 to 3.

10. A comestible food filling according to any one of claims 1 to 3 or a food product according to any one of claims 4 to 9, which is gluten-free and/or lactose-free.

11. A method of manufacturing of a filling composition according to any one of claims 1 to 3, comprising mixing at least 35% by weight pulse flour and from 25 to 50% by weight fat and/or oil, wherein fat does not include a fat of animal origin, and wherein the fat may be solid or liquid at ambient temperature, to obtain a mixture, and aerating said mixture to obtain a structurally stable aerated filling composition.

12. A method for the manufacture of a filled food product, comprising providing a filling composition according to any one of claims 1 to 3, preparing at least one comestible outer portion having a water content of not more than 11% by weight based on the total weight of the outer portion, and juxtaposing the filling composition with said at least one outer portion to obtain a filled food product, wherein the at least one comestible outer portion is selected from the group consisting of biscuit, cooked snack dough and granola.


**Patentansprüche**

1. Essbare, nicht gebackene Nahrungsmittel-Füllungszusammensetzung mit einer Wasseraktivität von nicht mehr als 0,6 und eines spezifischen Gewichts von nicht mehr als 1,05, wobei die Füllungszusammensetzung umfasst:

   - mindestens 35 Gew.-% Hülsenfruchtmehl; und
   - 25 bis 50 Gew.-% Fett und/oder Öl, wobei das Fett kein Fett tierischen Ursprungs einschließt und wobei das Fett bei Raumtemperatur fest oder flüssig sein kann;

   wobei die Füllungszusammensetzung bei 20 bis 25 °C mindestens 10 Wochen lang gelagert werden kann, ohne dass es zu einer wesentlichen Verschlechterung in Form einer nachweisbaren Verschlechterung der organoleptischen Eigenschaften kommt, und wobei die Füllungszusammensetzung um 10 bis 50 % mit Luft durchsetzt ist.

2. Zusammensetzung nach Anspruch 1, wobei der Anteil des Energiewerts (in kcal/100g oder kJ/100g) der Zusammensetzung, der dem in der Zusammensetzung enthaltene Protein zurechenbar ist, mindestens 5 % beträgt, vorzugsweise mindestens 12 %; und/oder die Zusammensetzung Ballaststoffe in einer Menge von mindestens 3 g pro 100 g umfasst, vorzugsweise mindestens 6 g pro 100 g.

3. Zusammensetzung nach einem der vorhergehenden Ansprüche, wobei das Hülsenfruchtmehl ein oder mehrere Mehle umfasst, die aus der Gruppe ausgewählt sind, bestehend aus Mehlen von Kichererbsen, trockenen Bohnen, Fababohnen, trockenen Erbsen und Linsen, vorzugsweise Kichererbsenmehl; und/oder die Zusammensetzung außerdem eine oder mehrere aus Sesamsamen gewonnene Zutaten, ausgewählt aus der Gruppe bestehend aus Sesamöl, Sesamsamenmehl und Tahini, umfasst.

4. Nahrungsmittelprodukt, umfassend mindestens einen gekochten, essbaren äußeren Teil, der einen Wassergehalt von nicht mehr als 11 Gew.-%, bezogen auf das Gesamtgewicht des äußeren Teils aufweist, und eine Füllungszusammensetzung nach einem der Ansprüche 1 bis 3, und wobei der essbare äußere Teil aus der Gruppe ausgewählt ist, bestehend aus Keks, gekochtem Snackteig und Müsli.

5. Nahrungsmittelprodukt nach Anspruch 4, wobei der mindestens eine essbare äußere Teil mindestens zwei gegenüberliegende Kekse oder mindestens zwei gegenüberliegende Snackstücke, die aus der Gruppe ausgewählt sind, bestehend aus gebackenen, expandierten, extrudierten oder frittierten SnackStücken, und die Füllungszusammensetzung zwischen den gegenüberliegenden Keksen oder Snackstücken eingeschlossen ist; oder wobei der mindestens eine gekochte, essbare äußere Teil einen essbaren äußeren Keks- oder Snackproduktteil umfasst, der eine hohle Umhüllung umfasst, der einen Hohlraum innerhalb der Umhüllung definiert, wobei die Füllungszusammensetzung in dem Hohlraum angeordnet ist.

6. Nahrungsmittelprodukt nach Anspruch 4 oder Anspruch 5, wobei das Nahrungsmittelprodukt mindestens 20 Gew.-% der Füllungszusammensetzung umfasst und/oder wobei mindestens 12 % des Brennwerts des Nahrungsmittels dem Protein zuordenbar ist, und/oder wobei die Füllungszusammensetzung ein Kichererbsenmehl umfasst.

**EP 3 554 247 B1**

7. Nahrungsmittelprodukt nach einem der Ansprüche 4 bis 6, wobei der mindestens eine äußere Teil ein Keks, ein Cookie, ein äußerer Teil eines gebackenen Snackprodukts oder ein äußerer Teil eines expandierten oder extrudierten Snackprodukts ist.

8. Nahrungsmittelprodukt nach einem der Ansprüche 4 bis 7, wobei der mindestens eine gekochte, essbare äußere Teil einen Wassergehalt von nicht mehr als 8 Gew.-% aufweist, vorzugsweise nicht mehr als 6 Gew.-%, bezogen auf das Gesamtgewicht des äußeren Teils.

9. Nahrungsmittelprodukt nach einem der Ansprüche 4 bis 8, wobei das Nahrungsmittelprodukt ein Doppelkeks oder ein gefülltes Snackprodukt ist, das eine Füllungszusammensetzung nach einem der Ansprüche 1 bis 3 umfasst.

10. Essbare Nahrungsmittelfüllung nach einem der Ansprüche 1 bis 3 oder ein Nahrungsmittelprodukt nach einem der Ansprüche 4 bis 9, das glutenfrei und/ oder laktosefrei ist.

11. Verfahren zur Herstellung einer Füllungszusammensetzung nach einem der Ansprüche 1 bis 3, umfassend das Mischen von mindestens 35 Gew.-% Hülsenfruchtmehl und 25 bis 50 Gew.-% Fett und/oder Öl, wobei das Fett kein Fett tierischen Ursprungs umfasst und wobei das Fett bei Umgebungstemperatur fest oder flüssig sein kann, um eine Mischung zu erhalten, und Belüften dieser Mischung, um eine strukturstabile mit Luft durchsetzte Füllungszusammensetzung zu erhalten.

12. Verfahren zur Herstellung eines gefüllten Nahrungsmittelprodukts, umfassend das Bereitstellen einer Füllungszusammensetzung nach einem der Ansprüche 1 bis 3, das Herstellen mindestens eines essbaren äußeren Teils mit einem Wassergehalt von nicht mehr als 11 Gew.-%, bezogen auf das Gesamtgewicht des äußeren Teils, und das Nebeneinanderstellen der Füllungszusammensetzung an den mindestens einen äußeren Teil, um ein gefülltes Nahrungsmittelprodukt zu erhalten, wobei der mindestens eine essbare äußere Teil aus der Gruppe ausgewählt ist, die aus Keks, gekochtem Snackteig und Müsli besteht.

## Revendications

1. Composition de garniture alimentaire non cuite présentant une activité hydrique inférieure ou égale à 0,6 et une densité inférieure ou égale à 1,05, dans laquelle la composition de garniture comprend :

   - au moins 35 % en poids de farine de légumineuses ; et
   - de 25 à 50 % en poids de graisse et/ou d'huile, dans laquelle la graisse n'inclut pas de graisse d'origine animale, et dans laquelle la graisse peut être solide ou liquide à température ambiante ;

   dans laquelle la composition de garniture peut être stockée à une température comprise entre 20 et 25 °C pendant au moins 10 semaines, sans détérioration matérielle sous la forme d'une détérioration détectable des propriétés organoleptiques, et dans laquelle la composition de garniture est aérée de 10 % à 50 %.

2. Composition selon la revendication 1, dans laquelle la proportion de la valeur énergétique (en kcal/100g ou kJ/100g) de la composition attribuable aux protéines présentes dans la composition est d'au moins 5 %, de préférence d'au moins 12 % ; et/ou la composition comprend des fibres alimentaires en quantité d'au moins 3 g par 100 g, de préférence d'au moins 6 g par 100 g.

3. Composition selon l'une quelconque des revendications précédentes, dans laquelle la farine de légumineuses comprend une ou plusieurs farines choisies dans le groupe constitué par les farines de pois chiches, de haricots secs, de féveroles, de pois secs et de lentilles, de préférence la farine de pois chiches ; et/ou la composition comprend en outre un ou plusieurs ingrédients dérivés de graines de sésame choisis dans le groupe constitué par l'huile de sésame, la farine de graines de sésame et le tahini.

4. Produit alimentaire comprenant au moins une portion extérieure comestible cuite dont la teneur en eau ne dépasse pas 11 % en poids par rapport au poids total de ladite portion extérieure, et une composition de garniture selon l'une des revendications 1 à 3, et dans lequel la portion extérieure comestible est choisie dans le groupe constitué par les biscuits, des encas cuits et les granolas.

5. Produit alimentaire selon la revendication 4, dans lequel ladite au moins une portion extérieure comestible comprend au moins deux biscuits opposés, ou au moins deux morceaux d'encas opposés choisis dans le groupe constitué de morceaux de snack cuits, expansés, extrudés ou frits, et ladite composition de garniture est englobée entre les biscuits ou les morceaux de snack opposés ; ou dans lequel ladite au moins une portion extérieure comestible cuite comprend un biscuit extérieur comestible ou une portion de produit de snack comprenant une portion d'enveloppe creuse définissant une région vide à l'intérieur de ladite portion d'enveloppe, ladite composition de garniture étant située dans ladite région vide.

6. Produit alimentaire selon la revendication 4 ou la revendication 5, dans lequel le produit alimentaire comprend au moins 20 % en poids de ladite composition de garniture, et/ou dans lequel au moins 12 % de la valeur calorifique du produit alimentaire sont attribuables aux protéines, et/ou dans lequel la composition de garniture comprend une farine de pois chiches.

7. Produit alimentaire selon l'une quelconque des revendications 4 à 6, dans lequel l'au moins une portion extérieure est un biscuit, un cookie, une portion extérieure de produit d'encas cuit ou une portion extérieure de produit d'encas expansé ou extrudé.

8. Produit alimentaire selon l'une quelconque des revendications 4 à 7, dans lequel l'au moins une portion extérieure comestible cuite comprend une teneur en eau inférieure ou égale à 8 % en poids, de préférence inférieure ou égale à 6 % en poids, par rapport au poids total de ladite portion extérieure.

9. Produit alimentaire selon l'une quelconque des revendications 4 à 8, dans lequel le produit alimentaire est un biscuit sandwich ou un produit de snack fourré comprenant une composition de garniture selon l'une quelconque des revendications 1 à 3.

10. Garniture alimentaire comestible selon l'une quelconque des revendications 1 à 3 ou produit alimentaire selon l'une quelconque des revendications 4 à 9, exempt de gluten et/ou de lactose.

11. Procédé de fabrication d'une composition de garniture selon l'une quelconque des revendications 1 à 3, comprenant le mélange d'au moins 35 % en poids de farine de légumineuses et de 25 à 50 % en poids de graisse et/ou d'huile, dans lequel la graisse n'inclut pas de graisse d'origine animale, et dans lequel la graisse peut être solide ou liquide à température ambiante, pour obtenir un mélange, et l'aération dudit mélange pour obtenir une composition de garniture aérée structurellement stable.

12. Procédé de fabrication d'un produit alimentaire fourré, comprenant la fourniture d'une composition de garniture selon l'une quelconque des revendications 1 à 3, la préparation d'au moins une portion extérieure comestible présentant une teneur en eau inférieure ou égale à 11 % en poids par rapport au poids total de la portion extérieure, et la juxtaposition de la composition de garniture avec ladite au moins une portion extérieure pour obtenir un produit alimentaire fourré, dans lequel la au moins une portion extérieure comestible est choisie dans le groupe constitué par des biscuits, des encas cuits et des granolas.

Fig. 1

Fig. 2

```
┌─────────┐        ┌─────────┐        ┌─────────┐
│    8    │ ─────▶ │    9    │ ─────▶ │   10    │
└─────────┘        └─────────┘        └─────────┘
```

Fig. 3

```
┌──────┐      ┌──────┐      ┌──────┐      ┌──────┐
│  11  │ ───▶ │  12  │ ───▶ │  13  │ ───▶ │  14  │
└──────┘      └──────┘      └──────┘      └──────┘
```

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CZ 18256 U1